# EUROPÄISCHE PATENTANMELDUNG

(11) **EP 1 381 243 A1**
(43) Veröffentlichungstag der Anmeldung: **14.01.2004**
(21) Anmeldenummer: 03014808.4
(22) Anmeldetag: 30.06.2003
(51) Int. Cl.: H04Q 1/14, H01R 9/24, H04Q 11/04

(54) **Verteilersystem einer Telekommunikationsanlage**

(30) Priorität: 09.07.2002 DE 10231039
(71) Anmelder: CCS Technology, Inc., Wilmington, DE 19803 (US)
(72) Erfinder: Czingon, Christa, Dipl.-Ing., 66793 Saarwellingen (DE); Vogt, Rainer, Dipl.-Ing., 45897 Gelsenkirchen (DE); Zimmer, Rainer, Dipl.-Ing., 58579 Schalksmühle (DE)
(74) Vertreter: Sturm, Christoph, Dipl.-Ing.

(57) **Zusammenfassung**

Ein Verteilersystem verfügt über einen Hauptverteiler (111), wobei der Hauptverteiler (111) mindestens einen ersten Verteilerblock (112) zum Anschließen von zu Teilnehmern führenden Teilnehmerkabeln (110) und mindestens einen zweiten Verteilerblock (113) zum Anschließen von zu einer Vermittlungsstelle (118) führenden Systemkabeln (117) aufweist. Der erste Verteilerblock (112) ist mit dem zweiten Verteilerblock (113) über Rangierkabel verbunden.

Erfindungsgemäß weist der Hauptverteiler (111) mindestens einen dritten Verteilerblock (114) auf, wobei in den oder jeden dritten Verteilerblock (114) Splitter (125) für splittergebundene DSL-Telekommunikationsdienste integriert sind.

## Beschreibung

Die Erfindung betrifft ein Verteilersystem einer Telekommunikationsanlage gemäß dem Oberbegriff des Anspruchs 1.

Die gleichzeitige Nutzung von hohen Frequenzen zur Übertragung von Datensignalen und von niedrigen Frequenzen zur Übertragung von Stimmsignalen über eine Kupferdoppelader setzt bei bestimmten DSL-Telekommunikationsdiensten die Verwendung eines Splitters voraus. Bei solchen sogenannten splittergebundenen DSL-Telekommunikationsdiensten handelt es sich zum Beispiel um ADSL oder VDSL.

Bei Verteilersystemen nach dem Stand der Technik sind die erforderlichen Splitter einer DSL-Telekommunikationseinrichtung zugeordnet. Im sogenannten Hauptverteiler, der getrennt von der DSL-Telekommunikationseinrichtung ausgebildet ist, ergibt sich dadurch ein erhöhter Verdrahtungsaufwand.

Hiervon ausgehend liegt der vorliegenden Erfindung das Problem zu Grunde, ein neuartiges Verteilersystem einer Telekommunikationsanlage zu schaffen.

Dieses Problem wird durch ein Verteilersystem mit den Merkmalen des Anspruchs 1 gelöst.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: ein schematisiertes Bockschaltbild eines Verteilersystems für eine Telekommunikationsanlage nach dem Stand der Technik,
- Fig. 2: ein schematisiertes Bockschaltbild eines erfindungsgemäßen Verteilersystems für eine Telekommunikationsanlage, und
- Fig. 3: einen Verteilerblock des erfindungsgemäßen Verteilersystems in perspektivischer Seitenansicht.

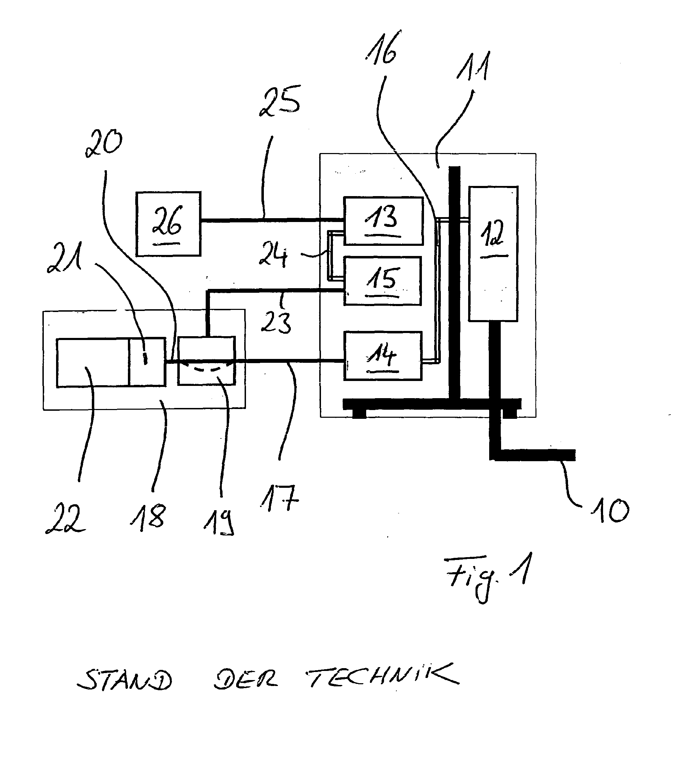

Figur 1 zeigt ein Verteilersystem einer Telekommunikationsanlage nach dem Stand der Technik. Bei dem dort gezeigten Verteilersystem handelt es sich um ein Verteilersystem, mit Hilfe dessen Teilnehmer verdrahtet werden können, die über eine Leitung gleichzeitig hochfrequente Datensignale sowie niederfrequente Stimmsignale übertragen.

Im Einzelnen nicht dargestellte Teilnehmer sind über ein Teilnehmerkabel 10 an einen Hauptverteiler 11 angeschlossen. Wie Figur 1 entnommen werden kann, umfasst der Hauptverteiler 11 einen ersten Verteilerblock 12. Am ersten Verteilerblock 12 werden demnach ankommende Teilnehmerkabel 10 angeschlossen und des Weiteren werden die von den Teilnehmerkabeln übertragenen Signale vor Überspannung und/oder Überstrom im ersten Verteilerblock 12 geschützt. In dem Fall, in dem lediglich niederfrequente Stimmsignale von den nicht dargestellten Teilnehmern genutzt würden, könnten die Signale vom ersten Verteilerblock 12 unmittelbar an einen zweiten Verteilerblock 13 des Hauptverteilers 11 weitergeleitet werden. In diesem Fall wären der erste Verteilerblock 12 und der zweite Verteilerblock 13 unmittelbar über Rangierkabel miteinander verschaltet. Bei dem in Figur 1 dargestellten Verteilersystem nach dem Stand der Technik, übertragen die Teilnehmer jedoch nicht nur über ein Teilnehmerkabel 10, welches als Kupferdoppelader ausgebildet ist, niederfrequente Stimmsignale sondern zusätzlich auch hochfrequente Datensignale. Um den Hauptverteiler 11 hierfür auszurüsten, verfügt ein Hauptverteiler 11 nach dem Stand der Technik neben dem ersten Verteilerblock 12 und dem zweiten Verteilerblock 13 über einen ersten Zwischenverteilerblock 14 und einen zweiten Zwischenverteilerblock 15. Der erste Zwischenverteilerblock 14 ist mit dem ersten Verteilerblock 12 über eine Datenleitung 16 verbunden. Der erste Zwischenverteilerblock 12 überträgt über die Datenleitung 16 sowohl die Datensignale als auch die Stimmsignale an den ersten Zwischenverteilerblock 14. Der erste Zwischenverteilerblock 14 ist über eine Datenleitung 17 mit einer DSL-Telekommunikationseinrichtung 18 verbunden. Auch über die Datenleitung 17 werden der DSL-Telekommunikationseinrichtung 18 sowohl die Datensignale als auch die Stimmsignale zugeführt. In der DSL-Telekommunikationseinrichtung 18 ist nach dem Stand der Technik ein Splitter 19 integriert. Der Splitter 19, der einen Tiefpassfilter umfasst, trennt die hochfrequenten Datensignale von den niederfrequenten Stimmsignalen und leitet lediglich die hochfrequenten Datensignale über eine Datenleitung 20 an einen Hochpassfilter 21 und eine sogenannte ATU-C-Einrichtung 22 der DSL-Telekommunikationseinrichtung 18 weiter. Das niederfrequente Stimmsignal wird vom Splitter 19 hingegen über eine Datenleitung 23 dem zweiten Zwischenverteilerblock 15 zugeführt, der über eine Datenleitung 24, eine sogenannte Rangierleitung, letztendlich mit dem zweiten Verteilerblock 13 verschaltet ist und hierüber die niederfrequenten Stimmsignale an den zweiten Verteilerblock 13 weiterleitet. Über sogenannte Systemkabel 25 ist der zweite Verteilerblock 13 mit einer Vermittlungsstelle 26 verbunden, über welche ein anderer Teilnehmer angewählt werden kann.

Bei dem aus dem Stand der Technik gemäß Figur 1 bekannten Verteilersystem sind demnach im Hauptverteiler 11 insgesamt vier Verteilerblöcke vorgesehen, nämlich der erste Verteilerblock 12, der zweite Verteilerblock 13, der erste Zwischenverteilerblock 14 und der zweite Zwischenverteilerblock 15.

Darüber hinaus sind zwischen dem Hauptverteiler 11 und der DSL-Telekommunikationseinrichtung 18 zwei Datenleitungen zur Kommunikation erforderlich, nämlich die Datenleitung 17 und die Datenleitung 23. Hierdurch ergibt sich ein hoher Verdrahtungsaufwand.

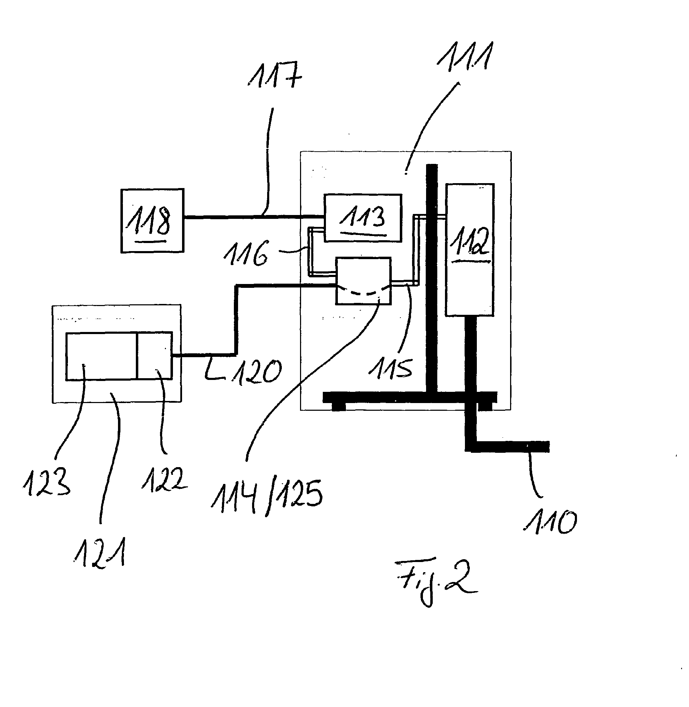

Ein erfindungsgemäßes Verteilersystem einer Telekommunikationsanlage zeigt Figur 2. Auch hier sind im Einzelnen nicht dargestellte Teilnehmer über ein Teilnehmerkabel 110 an einen Hauptverteiler 111 angeschlossen. Der Hauptverteiler 111 gemäß Figur 2 verfügt ebenso wie der Hauptverteiler 11 nach dem Stand der Technik über einen ersten Verteilerblock 112 und einen zweiten Verteilerblock 113. Am ersten Verteilerblock 112 werden demnach die Teilnehmerkabel 110 angeschlossen und von den Teilnehmern übertragene hochfrequente Datensignale und niederfrequente Stimmsignale werden am ersten Verteilerblock 112 vor Überspannungen und/oder Überströmen geschützt.

Erfindungsgemäß verfügt der Hauptverteiler 111 über einen dritten Verteilerblock 114. Der dritte Verteilerblock 114 ist einerseits über eine Datenleitung 115 mit dem ersten Verteilerblock 112 und andererseits über eine Datenleitung 116 mit dem zweiten Verteilerblock 113 verbunden. Der zweite Verteilerblock 113 ist wiederum über sogenannte Systemkabel 117 mit einer Vermittlungsstelle 118 verbunden.

Erfindungsgemäß sind in den dritten Verteilerblock 114 Splitter 125 integriert. Die Splitter 125 verfügen über eine Tiefpassfilter und gegebenenfalls über einen Hochpassfilter und trennen die über die Datenleitung 115 gleichzeitig übertragenen hochfrequenten Datensignale von den niederfrequenten Stimmsignalen. Die niederfrequenten Stimmsignale werden über die Datenleitung 116 dem zweiten Verteilerblock 113 zugeführt. Die hochfrequenten Datensignale hingegen werden von den Splittern über eine Datenleitung 120 einer DSL-Telekommunikationseinrichtung 121 zugeführt. Die DSL-Telekommunikationseinrichtung 121 verfügt wiederum über einen Hochpassfilter 122 und eine sogenannte ATU-C-Einrichtung 123.

Es liegt demnach im Sinne der Erfindung, dass der Hauptverteiler 111 über einen dritten Verteiler 114 verfügt, in den Splitter 125 integriert sind. Auf diese Art und Weise benötigt der Hauptverteiler 111 nunmehr lediglich drei Verteilerblöcke. Darüber hinaus ist zwischen dem Hauptverteiler 111 und der DSL-Telekommunikationseinrichtung 121 lediglich eine Datenleitung erforderlich. Daraus folgt unmittelbar, dass durch die Erfindung einerseits die Anzahl der Baugruppen im Hauptverteiler 111 um einen Verteilerblock reduziert werden kann und das andererseits zwischen dem Hauptverteiler 111 und der DSL-Telekommunikationseinrichtung 121 eine Datenleitung eingespart und damit der Verdrahtungsaufwand reduziert wird.

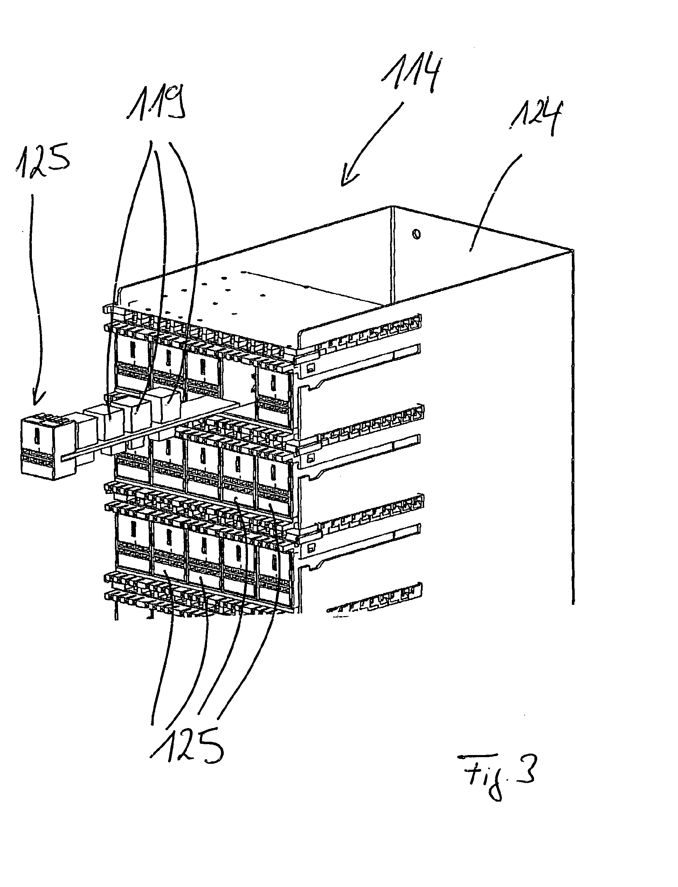

Figur 3 zeigt den dritten Verteilerblock 114 des erfindungsgemäßen Verteilersystems einer Telekommunikationsanlage in perspektivischer Seitenansicht. So verfügt der dritte Verteilerblock 114 über ein Gehäuse 124, in welchem reihenweise übereinander die Splitter 125 angeordnet sind. Jedem Teilnehmer ist ein Splitter 125 zugeordnet. Jeder der Splitter 125 ist aus dem Gehäuse 124 von der Frontseite her herausziehbar bzw. in das Gehäuse 124 hineinsteckbar. Darüber hinaus kann Figur 3 entnommen werden, dass jeder Splitter 125 aus mehreren elektrischen oder elektronischen Baugruppen 119 zusammengesetzt ist, zum Beispiel aus Widerständen, Kondensatoren oder Spulen. Bedingt durch diesen modularen Aufbau des dritten Verteilerblocks 114 können die Splitter 125 leicht ausgetauscht und damit an die von dem Teilnehmer verwendete Übertragungstechnik angepasst werden. So kann ein Splitter 125, der ursprünglich als ADSL-Splitter ausgebildet ist, leicht und ohne Verdrahtungsaufwand durch einen sogenannten VDSL-Splitter ausgetauscht werden. Im erfindungsgemäßen Verteilersystem können demnach in einem System verschiedene, voneinander unabhängige Übertragungsarten verarbeitet und damit realisiert werden.

Mit dem erfindungsgemäßen Verteilersystem kann demnach jedem Teilnehmer durch einfachen Austausch des Splitters 125 eine individuelle Übertragungsart bereitgestellt werden, ohne angrenzende Teilnehmer zu beeinflussen und ohne erforderlichen Verdrahtungsaufwand. Wird eine DSL-Nutzung und damit die Übertragung hochfrequenter Datensignale von einem Teilnehmer nicht gewünscht, so kann durch einen einfachen Überbrückungsstecker im dritten Verteilerblock 114 unmittelbar vom ersten Verteilerblock 112 auf den zweiten Verteilerblock 113 geschaltet und auf einen sogenannten POTS- oder ISDN-Service umgestellt werden. Nochmals sei darauf hingewiesen, dass die Anzahl der Baugruppen im Hauptverteiler und der Verdrahtungsaufwand zwischen dem Hauptverteiler und der DSL-Telekommunikationseinrichtung reduziert wird.

### Bezugszeichenliste

- 10: Teilnehmerkabel
- 11: Hauptverteiler
- 12: erster Verteilerblock
- 13: zweiter Verteilerblock
- 14: erster Zwischenverteilerblock
- 15: zweiter Zwischenverteilerblock
- 16: Datenleitung
- 17: Datenleitung
- 18: DSL-Telekommunikationseinrichtung
- 19: Splitter
- 20: Datenleitung
- 21: Hochpassfilter
- 22: ATU-C-Einrichtung
- 23: Datenleitung
- 24: Datenleitung
- 25: Systemkabel
- 26: Vermittlungsstelle

- 110: Teilnehmerkabel
- 111: Hauptverteiler
- 112: erster Verteilerblock
- 113: zweiter Verteilerblock
- 114: dritter Verteilerblock
- 115: Datenleitung
- 116: Datenleitung
- 117: Systemkabel
- 118: Vermittlungsstelle
- 119: Komponente
- 120: Datenleitung
- 121: DSL-Telekommunikationseinrichtung
- 122: Hochpassfilter
- 123: ATU-C-Einrichtung
- 124: Gehäuse
- 125: Splitter

## Patentansprüche

1. Verteilersystem einer Telekommunikationsanlage, mit einem Hauptverteiler (111), wobei der Hauptverteiler (111) mindestens einen ersten Verteilerblock (112) zum Anschließen von zu Teilnehmern führenden Teilnehmerkabeln (110), mindestens einen zweiten Verteilerblock (113) zum Anschließen von zu einer Vermittlungsstelle (118) führenden Systemkabeln (117) und mindestens einen dritten Verteilerblock (114) aufweist, wobei in den oder jeden dritten Verteilerblock (114) Splitter (125) für splittergebundene DSL-Telekommunikationsdienste integriert sind, **dadurch gekennzeichnet, dass der** dritte Verteilerblock (114) über einen modularen Aufbau verfügt, derart, dass jedem Teilnehmer durch Bereitstellung eines entsprechenden Splitters (125) ein individueller DSL-Telekommunikationsdient bereitstellbar ist, wobei dann, wenn von einem Teilnehmer kein DSL-Telekommunikationsdienst genutzt wird, der entsprechende Splitter (125) durch eine Überbrückungseinrichtung zur Bereitstellung eines POTS- oder ISDN-Dienstes ausgetauscht ist.

2. Verteilersystem nach Anspruch 1, **dadurch gekennzeichnet, dass** ein oder mehrere Splitter (125) durch eine entsprechende Überbrückungseinrichtung zur Bereitstellung eines POTS- oder ISDN-Dienstes austauchschbar sind.

3. Verteilersystem nach Anspruch 1 oder 2, **dadurch gekennzeichnet, dass** der dritte Verteilerblock (114) zwischen den ersten Verteilerblock (112) und den zweiten Verteilerblock (113) geschaltet ist, derart, dass der erste Verteilerblock (112) unter Zwischenschaltung des dritten Verteilerblocks (114) mit dem zweiten Verteilerblock (113) verbunden ist.

4. Verteilersystem nach einem oder mehreren der Ansprüche 1 bis 3, **dadurch gekennzeichnet, dass** im dritten Verteilerblock (114) die Teilnehmersignale mit Hilfe der Splitter (125) derart bearbeitet werden, dass niederfrequente Stimmsignale von hochfrequenten Datensignalen getrennt werden.

5. Verteilersystem nach Anspruch **4, dadurch gekennzeichnet, dass der** dritte Verteilerblock (114) die niederfrequenten Stimmsignale dem zweiten Verteilerblock (113) bereitstellt.

6. Verteilersystem nach Anspruch 4 oder 5, **dadurch gekennzeichnet, dass** der dritte Verteilerblock (114) die hochfrequenten Datensignale einer DSL-Telekommunikationseinrichtung (121) bereitstellt.
